(19) Europäisches Patentamt / European Patent Office / Office européen des brevets

(11) EP 2 814 778 B1

(12) **EUROPÄISCHE PATENTSCHRIFT**

(45) Veröffentlichungstag und Bekanntmachung des Hinweises auf die Patenterteilung:
**03.02.2016 Patentblatt 2016/05**

(21) Anmeldenummer: **13703028.4**

(22) Anmeldetag: **05.02.2013**

(51) Int Cl.:
***C01G 51/00*** (2006.01) ***C01G 53/00*** (2006.01)
***H01M 4/1315*** (2010.01) ***H01M 4/13915*** (2010.01)
***H01M 4/36*** (2006.01) ***H01M 4/505*** (2010.01)
***H01M 4/525*** (2010.01) ***H01M 4/62*** (2006.01)

(86) Internationale Anmeldenummer:
**PCT/EP2013/052192**

(87) Internationale Veröffentlichungsnummer:
**WO 2013/120724 (22.08.2013 Gazette 2013/34)**

(54) **PARTIKEL, VERFAHREN ZU IHRER HERSTELLUNG UND IHRE VERWENDUNG**

PARTICLES, METHOD FOR THE PRODUCTION THEREOF, AND USE THEREOF

PARTICULES, PROCÉDÉ DE PRODUCTION DESDITES PARTICULES ET UTILISATION DESDITES PARTICULES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.02.2012 EP 12155524**

(43) Veröffentlichungstag der Anmeldung:
**24.12.2014 Patentblatt 2014/52**

(73) Patentinhaber: **BASF SE**
**67056 Ludwigshafen (DE)**

(72) Erfinder:
- **VOLKOV, Aleksei**
  **67065 Ludwigshafen (DE)**
- **LEITNER, Klaus**
  **67063 Ludwigshafen (DE)**
- **SCHULZ-DOBRICK, Martin**
  **68165 Mannheim (DE)**
- **LAMPERT, Jordan Keith**
  **67063 Ludwigshafen (DE)**

(56) Entgegenhaltungen:
**EP-A1- 2 368 850** **WO-A1-2006/109930**
**WO-A2-2010/042434** **US-A1- 2004 091 779**
**US-A1- 2005 112 054**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Partikel, enthaltend ein Mischoxid der allgemeinen Formel (I)

$$Li_{1+a}Ni_bCo_cMn_dO_z \qquad (I)$$

in dem die Variablen wie folgt definiert sind:

b eine Zahl im Bereich von 0,25 bis 0,45
c eine Zahl im Bereich von 0,15 bis 0,25

$$d = 1 - b - c$$

$$1{,}8 + a \leq z \leq 2{,}2 + a$$

(1+a) im Bereich von 1,05 bis 1,20,
wobei die Partikel vollständig oder partiell beschichtet sind mit einem oder mehreren Fluoriden,
wobei Fluoride gewählt sind aus LiF, $NiF_2$, $CoF_2$, $MnF_2$ und Oxifluoriden von einem oder mehreren Metallen, gewählt aus Ni, Mn und Co.

Weiterhin betrifft die vorliegende Erfindung ein Verfahren zur Herstellung von erfindungsgemäßen Partikeln. Weiterhin betrifft die vorliegende Erfindung die Verwendung von erfindungsgemäßen Partikeln.

Elektrochemische Zellen, die eine hohe Speicherkapazität bei möglichst hoher Arbeitsspannung aufweisen, sind von zunehmender Bedeutung. Die gewünschten Kapazitäten sind mit elektrochemischen Zellen, die auf Basis von wässrigen Systemen arbeiten, in der Regel nicht zu erreichen.

In Lithium-Ionen-Batterien wird der Ladungstransport nicht durch Protonen in mehr oder weniger stark hydratisierter Form gewährleistet, sondern durch Lithiumionen in einem nicht-wässrigen Lösungsmittel oder in einem nicht-wässrigen Lösungsmittelsystem. Eine besondere Rolle kommt dabei dem Elektrodenmaterial zu. Dabei werden besonders hohe Ansprüche an das Kathodenmaterial gestellt.

Problematisch sind in vielen Fällen solche Kathoden, die bei hoher Spannung, also beispielsweise bei 4,3 V oder mehr, arbeiten sollen. Unter diesen Umständen droht eine Oxidation des Elektrolyten, oft verbunden mit seiner Polymerisation. Polymerschichten auf der Kathode können jedoch im ungünstigsten Falle als Isolator wirken und daher zu einer deutlich gesenkten Effizienz der Batterie führen. Außerdem erweisen sich viele Kathodenmaterialien bei solchen Spannungen als nicht zyklenstabil, da beim Entladen zu viel Lithium aus der Struktur herausgenommen wird (Delithiierung), und die Struktur eines entsprechenden Kathodenmaterials kann zusammenbrechen.

Aus WO2006/109930 ist Kathodenmaterial $Li_{1+a}Ni_{1-x-y}Co_xMn_yO_{2-b}F_b$, mit $0{,}01 \leq a \leq 0{,}2$, $0 \leq b \leq 0{,}1$, $0{,}05 \leq x \leq 0{,}4$, $0{,}05 \leq y \leq 0{,}35$ und $0{,}1 \leq x+y \leq 0{,}75$, das mit einem oder mehreren Fluoriden beschichtet ist, bekannt.

Es bestand also die Aufgabe, Materialien bereit zu stellen, die zur Herstellung von Kathoden geeignet sind, die auch bei hoher Spannung, also beispielsweise bei 4,3 V oder mehr, und insbesondere bei mehrfacher starker Delithiierung eine hohe Lebensdauer aufweisen. Es bestand weiterhin die Aufgabe, ein Verfahren bereit zu stellen, durch welches man Materialien machen kann, die zu entsprechenden Kathoden weiterverarbeitet werden können. Es bestand weiterhin die Aufgabe, Elektroden und elektrochemische Zellen bereit zu stellen, die auch bei hoher Spannung und insbesondere bei mehrfacher starker Delithiierung eine hohe Lebensdauer aufweisen.

Dementsprechend wurden die eingangs definierten Partikel gefunden, die auch im Rahmen der vorliegenden Erfindung erfindungsgemäße Partikel genannt werden.

Im Rahmen der vorliegenden Erfindungen werden dabei "zyklieren" und "zyklisieren" mit gleicher Bedeutung verwendet und bezeichnen das Aufladen und wieder Entladen von Batterien oder von elektrochemischen Zellen.

Erfindungsgemäße Partikel enthalten mindestens ein Mischoxid der allgemeinen Formel (I)

$$Li_{1+a}Ni_bCo_cMn_dO_z \qquad (I)$$

in dem die Variablen wie folgt definiert sind:

b eine Zahl im Bereich von 0,25 bis 0,45, bevorzugt 0,37 bis 0,42,
c eine Zahl im Bereich von 0,15 bis 0,25, bevorzugt 0,17 bis 0,22,

$$d = 1 - b - c$$

(1+a) im Bereich von 1,05 bis 1,20, bevorzugt 1,10 bis 1,15,

$$1{,}8 + a \leq z \leq 2{,}2 + a$$

wobei die Partikel vollständig oder vorzugsweise partiell beschichtet sind mit einem oder mehreren Fluoriden, wobei Fluoride gewählt sind aus LiF, $NiF_2$, $CoF_2$, $MnF_2$ und Oxifluoriden von einem oder mehreren Metallen, gewählt aus Ni, Mn und Co.

In einer Ausführungsform der vorliegenden Erfindung enthalten erfindungsgemäße Partikel mindestens zwei Mischoxide der allgemeinen Formel (I). In einer anderen Ausführungsform der vorliegenden Erfindung enthalten erfindungsgemäße Partikel genau ein Mischoxid der allgemeinen Formel (I).

In einer Ausführungsform der vorliegenden Erfindung enthalten erfindungsgemäße Partikel neben Mischoxid der allgemeinen Formel (I) keine weiteren Mn-, Co- oder Ni-haltigen oxidischen Verbindungen. In einer anderen Ausführungsform der vorliegenden Erfindung können erfindungsgemäße Partikel $Li_2MnO_3$ enthalten, beispielsweise im Bereich von 5 bis 22 mol-%, bezogen auf Verbindung der allgemeinen Formel (I).

In einer Ausführungsform der vorliegenden Erfindung weisen erfindungsgemäße Partikel ein Molverhältnis von Fluorid zu Summe der Übergangsmetalle in Mischoxid der allgemeinen Formel (I) im Bereich von 0,02 bis 0,15 auf.

In einer Ausführungsform der vorliegenden Erfindung weisen erfindungsgemäße Materialien im Wesentlichen Schichtstruktur auf, sind also Schichtoxide. Die Struktur des jeweiligen Kristallgitters lässt sich durch an sich bekannte Methoden, beispielsweise Röntgenbeugung oder Elektronenbeugung, insbesondere durch Röntgen-Pulverdiffraktometrie, bestimmen.

In einer Ausführungsform der vorliegenden Erfindung können erfindungsgemäße Partikel eine BET-Oberfläche im Bereich von 0,1 bis 5 $m^2/g$ aufweisen, bestimmt beispielsweise durch Stickstoff-Adsorption, beispielsweise nach DIN ISO 9277:2003-05.

In einer Ausführungsform der vorliegenden Erfindung können erfindungsgemäße Materialien mit insgesamt bis zu 2 Gew.-% Metallionen dotiert ist, gewählt aus Kationen von Na, K, Rb, Cs, Erdalkali, Ti, V, Cr, Fe, Cu, Ag, Zn, B, Al, Zr, Mo, W, Nb, Si, Ga und Ge, bevorzugt mit insgesamt bis zu einem Gew.-%, bezogen auf gesamte Verbindung (I). In einer bevorzugten Ausführungsform der vorliegenden Erfindung sind erfindungsgemäße Materialien nicht mit anderen Metallionen dotiert.

Dabei soll unter "dotieren" verstanden werden, dass man bei der Herstellung von erfindungsgemäßen Materialien in einem oder mehreren Schritten mindestens eine Verbindung zusetzt, die ein oder mehrere Kationen aufweist, gewählt aus Kationen von Na, K, Rb, Cs, Erdalkali, Ti, V, Cr, Fe, Cu, Ag, Zn, B, Al, Zr, Mo, W, Nb, Si, Ga und Ge. Durch geringfügige Verunreinigungen der Ausgangsmaterialien eingeführte Verunreinigungen, beispielsweise im Bereich von 0,1 bis 100 ppm Na-Ionen, bezogen auf das erfindungsgemäße Material, sollen im Rahmen der vorliegenden Erfindung nicht als Dotierung bezeichnet werden.

In einer Ausführungsform der vorliegenden Erfindung weisen erfindungsgemäße Partikel bis maximal 1 Gew.-% Sulfat oder Carbonat auf. In einer anderen Ausführungsform der vorliegenden Erfindung weist erfindungsgemäßes Material keine nachweisbaren Anteile an Sulfat und/oder Carbonat auf.

In einer Ausführungsform der vorliegenden Erfindung liegt Verbindung der allgemeinen Formel (I) als kristallines Pulver vor.

In einer Ausführungsform der vorliegenden Erfindung sind erfindungsgemäße Partikel im Wesentlichen kugelförmig. In einer Ausführungsform der vorliegenden Erfindung sind erfindungsgemäße Partikel im Wesentlichen sphärische, sekundäre Agglomerate von Primärpartikeln. Der Partikeldurchmesser (D50) der sekundären Agglomerate kann im Bereich von 1 bis 30 $\mu$m liegen, bevorzugt im Bereich von 2 bis 25 $\mu$m, besonders bevorzugt im Bereich von 4 bis 20 $\mu$m. Dabei bezeichnet Partikeldurchmesser (D50) im Rahmen der vorliegenden Erfindung den mittleren Partikeldurchmesser (Gewichtsmittel), wie er beispielsweise durch Lichtstreuung oder durch Auswertung von Elektronenmikroskopie-Aufnahmen ermittelt werden kann.

Unter "im Wesentlichen kugelförmig" bzw. "im Wesentlichen sphärisch" soll dabei verstanden werden, dass erfindungsgemäße Partikel entweder genau kugelförmig sind oder aber runde Formen aufweisen, wobei der Durchmesser an der größten Stelle und der Durchmesser an der kleinsten Stelle nicht mehr als 10% voneinander abweichen.

Erfindungsgemäße Partikel sind vollständig oder partiell beschichtet mit einem oder mehreren Fluoriden, das heißt, das erfindungsgemäße Partikel eine Beschichtung mit einem oder mehreren Fluoriden aufweisen. Die Beschichtung soll dabei als Bestandteil von erfindungsgemäßen Partikeln gelten.

Fluoride sind gewählt aus LiF, $NiF_2$, $CoF_2$, $MnF_2$ und gegebenenfalls gemischten Fluoriden von mindestens

zwei Metallen, gewählt aus Mn, Ni und Co, und aus Oxifluoriden von einem oder mehreren Metallen, gewählt aus Ni, Mn und Co. Bevorzugt sind Fluoride gewählt aus LiF, $NiF_2$, $CoF_2$ und $MnF_2$.

In einer Ausführungsform der vorliegenden Erfindung sind mindestens 5% der äußeren Oberfläche von erfindungsgemäßen Partikeln mit Fluorid bedeckt. Hierbei ist der Durchschnittswert gemeint. In einer bevorzugten Ausführungsform sind 10 bis 90% der äußeren Oberfläche von erfindungsgemäßen Partikeln mit Fluorid bedeckt. Die Bedeckung lässt sich beispielsweise durch Photoelektronenspektroskopie (XPS) oder Elektronenmikroskopie (SEM, TEM) ermitteln.

Fluorid, mit dem erfindungsgemäße Partikel beschichtet sind, kann dabei in kristalliner oder in amorpher Form vorliegen.

In einer Ausführungsform der vorliegenden Erfindung sind erfindungsgemäße Partikel mit einem Gemisch von Fluoriden ganz oder partiell beschichtet, beispielsweise mit zwei oder mehr Fluoriden, gewählt aus LiF, $NiF_2$, $CoF_2$, $MnF_2$ und Oxifluoriden von einem oder mehreren Metallen, gewählt aus Ni, Mn und Co.

In einer Ausführungsform der vorliegenden Erfindung sind das oder die Fluoride in Form von einzelnen Kristallen, amorphen oder kristallinen Schichten auf der äußeren Oberfläche von erfindungsgemäßen Partikeln angeordnet.

In einer Ausführungsform der vorliegenden Erfindung ist Fluorid auf der äußeren Oberfläche von erfindungsgemäßen Partikeln, aber nicht in den Poren. In einer anderen Ausführungsform der vorliegenden Erfindung ist Fluorid nicht nur auf der äußeren Oberfläche, sondern auch in den Poren von erfindungsgemäßen Partikeln, insbesondere in den Poren, die durch die Agglomeration von Primärpartikeln entstehen.

Mit Hilfe von erfindungsgemäßen Partikeln lassen sich elektrochemische Zellen mit guten Eigenschaften herstellen. Insbesondere beobachtet man, dass mit Verbindung der allgemeinen Formel (I) hergestellte elektrochemische Zellen eine hohe Entladekapazität aufweisen, wenn man sie zwischen 3,0 V und 4,6 V gegen elementares Lithium zykliert, wobei die betreffenden elektrochemischen Zellen keinen oder nur einen sehr geringen Abfall der Spannung bei Zyklieren zeigen. Die mittlere Entladespannung sollte beim Zyklisieren zwischen 3,0 V und 4,6 V gegen elementares Lithium und Stromraten von 25 mA/g erfindungsgemäßem Material größer als 3,5 V sein.

Ein weiterer Gegenstand der vorliegenden Erfindung sind Elektroden, enthaltend erfindungsgemäße Partikel.

Erfindungsgemäße Partikel können im Rahmen der vorliegenden Erfindung auch als Material (A) bezeichnet werden.

In einer Ausführungsform der vorliegenden Erfindung verwendet man erfindungsgemäße Partikel in erfindungsgemäßen Elektroden als Komposit mit elektrisch leitfähigem, kohlenstoffhaltigem Material. Beispielsweise können erfindungsgemäße Partikel mit elektrisch leitfähigem, kohlenstoffhaltigem Material behandelt sein, beispielsweise beschichtet. Derartige Komposite sind ebenfalls Gegenstand der vorliegenden Erfindung.

Elektrisch leitfähiges, kohlenstoffhaltiges Material kann man beispielsweise aus Graphit, Ruß, Kohlenstoffnanoröhren, Graphen oder Mischungen von mindestens zwei der vorstehend genannten Stoffen wählen. Im Rahmen der vorliegenden Erfindung kann elektrisch leitfähiges, kohlenstoffhaltiges Material auch kurz als Kohlenstoff (B) bezeichnet werden.

In einer Ausführungsform der vorliegenden Erfindung handelt es sich bei elektrisch leitfähigem, kohlenstoffhaltigem Material um Ruß. Ruß kann beispielsweise gewählt werden aus Lampenruß, Ofenruß, Flammruß, Thermalruß, Acetylenruß, Industrieruß und Furnace Ruß. Ruß kann Verunreinigungen enthalten, beispielsweise Kohlenwasserstoffe, insbesondere aromatische Kohlenwasserstoffe, oder Sauerstoff-haltige Verbindungen bzw. Sauerstoff-haltige Gruppen wie beispielsweise OH-Gruppen. Weiterhin sind Schwefel- oder Eisen-haltige Verunreinigungen in Ruß möglich.

In einer Variante handelt es sich bei elektrisch leitfähigem, kohlenstoffhaltigem Material um partiell oxidierten Ruß.

In einer Ausführungsform der vorliegenden Erfindung handelt es sich bei elektrisch leitfähigem, kohlenstoffhaltigem Material um Kohlenstoff-Nanoröhren (englisch carbon nanotubes). Kohlenstoff-Nanoröhren (Kohlenstoffnanoröhren, kurz CNT oder englisch Carbon nanotubes), beispielsweise einwandige Kohlenstoffnanoröhren (englisch single-walled carbon nanotubes, SW CNT) und bevorzugt mehrwandige Kohlenstoffnanoröhren (englisch multi-walled carbon nanotubes, MW CNT), sind an sich bekannt. Ein Verfahren zu ihrer Herstellung und einige Eigenschaften werden beispielsweise von A. Jess et al. in Chemie Ingenieur Technik 2006, 78, 94 - 100 beschrieben.

In einer Ausführungsform der vorliegenden Erfindung haben Kohlenstoffnanoröhren einen Durchmesser im Bereich von 0,4 bis 50 nm, bevorzugt 1 bis 25 nm.

In einer Ausführungsform der vorliegenden Erfindung haben Kohlenstoffnanoröhren eine Länge im Bereich von 10 nm bis 1 mm, bevorzugt 100 nm bis 500 nm.

Kohlenstoff-Nanoröhren kann man nach an sich bekannten Verfahren herstellen. Beispielsweise kann man eine flüchtige Kohlenstoff-haltige Verbindung wie beispielsweise Methan oder Kohlenmonoxid, Acetylen oder Ethylen, oder ein Gemisch von flüchtigen-Kohlenstoff-haltigen Verbindungen wie beispielsweise Synthesegas in Gegenwart von einem oder mehreren Reduktionsmitteln wie beispielsweise Wasserstoff und/oder einem weiteren Gas wie beispielsweise Stickstoff zersetzen. Ein anderes geeignetes Gasgemisch ist eine Mischung von Kohlenmonoxid mit Ethylen. Geeignete Temperaturen zur Zersetzung liegen beispielsweise im Bereich von 400 bis 1000°C, bevorzugt 500 bis 800°C. Geeignete Druckbedingungen für die Zersetzung sind beispielsweise im Bereich von Normaldruck bis 100 bar, bevorzugt

bis 10 bar.

Ein- oder mehrwandige Kohlenstoffnanoröhren kann man beispielsweise durch Zersetzung von Kohlenstoff-haltigen Verbindungen im Lichtbogen erhalten, und zwar in Anwesenheit bzw. Abwesenheit eines Zersetzungskatalysators.

In einer Ausführungsform führt man die Zersetzung von flüchtiger Kohlenstoff-haltiger Verbindung bzw. Kohlenstoff-haltigen Verbindungen in Gegenwart eines Zersetzungskatalysators durch, beispielsweise Fe, Co oder bevorzugt Ni.

Unter Graphen werden im Rahmen der vorliegenden Erfindung fast ideal oder ideal zweidimensionale hexagonale Kohlenstoffkristalle verstanden, die analog zu einzelnen Graphitschichten aufgebaut sind.

In einer Ausführungsform der vorliegenden Erfindung liegt in erfindungsgemäßen Elektroden das Gewichtsverhältnis von erfindungsgemäßen Partikeln zu elektrisch leitfähigem, kohlenstoffhaltigem Material im Bereich von 200:1 bis 5:1, bevorzugt 100:1 bis 10:1.

Ein weiterer Aspekt der vorliegenden Erfindung ist eine Elektrode, insbesondere eine Kathode, enthaltend erfindungsgemäße Partikel, mindestens ein elektrisch leitfähiges, kohlenstoffhaltiges Material und mindestens ein Bindemittel. Erfindungsgemäße Partikel, mindestens ein elektrisch leitfähiges, kohlenstoffhaltiges Material und mindestens ein Bindemittel sind dazu zu Elektrodenmaterial verbunden, welches ebenfalls ein Gegenstand der vorliegenden Erfindung ist.

Erfindungsgemäße Partikel und elektrisch leitfähiges, kohlenstoffhaltiges Material sind vorstehend beschrieben.

Geeignete Bindemittel sind vorzugsweise gewählt aus organischen (Co)polymeren. Geeignete (Co)polymere, also Homopolymere oder Copolymere, kann man beispielsweise wählen aus durch anionische, katalytische oder radikalische (Co)polymerisation erhältlichen (Co)polymeren, insbesondere aus Polyethylen, Polyacrylnitril, Polybutadien, Polystyrol, und Copolymeren von mindestens zwei Comonomeren, gewählt aus Ethylen, Propylen, Styrol, (Meth)acrylnitril und 1,3-Butadien. Außerdem ist Polypropylen geeignet. weiterhin sind Polyisopren und Polyacrylate geeignet. Besonders bevorzugt ist Polyacrylnitril.

Unter Polyacrylnitril werden im Rahmen der vorliegenden Erfindung nicht nur Polyacrylnitril-Homopolymere verstanden, sondern auch Copolymere von Acrylnitril mit 1,3-Butadien oder Styrol. Bevorzugt sind Polyacrylnitril-Homopolymere.

Im Rahmen der vorliegenden Erfindung wird unter Polyethylen nicht nur Homo-Polyethylen verstanden, sondern auch Copolymere des Ethylens, die mindestens 50 mol-% Ethylen einpolymerisiert enthalten und bis zu 50 mol-% von mindestens einem weiteren Comonomer, beispielsweise $\alpha$-Olefine wie Propylen, Butylen (1-Buten), 1-Hexen, 1-Octen, 1-Decen, 1-Dodecen, 1-Penten, weiterhin Isobuten, Vinylaromaten wie beispielsweise Styrol, weiterhin (Meth)acrylsäure, Vinylacetat, Vinylpropionat, $C_1$-$C_{10}$-Alkylester der (Meth)acrylsäure, insbesondere Methylacrylat, Methylmethacrylat, Ethylacrylat, Ethylmethacrylat, n-Butylacrylat, 2-Ethylhexylacrylat, n-Butylmethacrylat, 2-Ethylhexylmethacrylat, weiterhin Maleinsäure, Maleinsäureanhydrid und Itaconsäureanhydrid. Bei Polyethylen kann es sich um HDPE oder um LDPE handeln.

Im Rahmen der vorliegenden Erfindung wird unter Polypropylen nicht nur Homo-Polypropylen verstanden, sondern auch Copolymere des Propylens, die mindestens 50 mol-% Propylen einpolymerisiert enthalten und bis zu 50 mol-% von mindestens einem weiteren Comonomer, beispielsweise Ethylen und $\alpha$-Olefine wie Butylen, 1-Hexen, 1-Octen, 1-Decen, 1-Dodecen und 1-Penten. Bei Polypropylen handelt es sich vorzugsweise um isotaktisches oder um im Wesentlichen isotaktisches Polypropylen.

Im Rahmen der vorliegenden Erfindung werden unter Polystyrol nicht nur Homopolymere des Styrols verstanden, sondern auch Copolymere mit Acrylnitril, 1,3-Butadien, (Meth)acrylsäure, $C_1$-$C_{10}$-Alkylester der (Meth)acrylsäure, Divinylbenzol, insbesondere 1,3-Divinylbenzol, 1,2-Diphenylethylen und $\alpha$-Methylstyrol.

Ein anderes bevorzugtes Bindemittel ist Polybutadien.

Andere geeignete Bindemittel sind gewählt aus Polyethylenoxid (PEO), Cellulose, Carboxymethylcellulose, Polyimiden und Polyvinylalkohol.

In einer Ausführungsform der vorliegenden Erfindung wählt man Bindemittel aus solchen (Co)polymeren, die ein mittleres Molekulargewicht $M_w$ im Bereich von 50.000 bis 1.000.000 g/mol, bevorzugt bis 500.000 g/mol aufweisen.

Bei Bindemitteln kann es sich um vernetzte oder unvernetzte (Co)polymere handeln.

In einer besonders bevorzugten Ausführungsform der vorliegenden Erfindung wählt man Bindemittel aus halogenierten (Co)polymeren, insbesondere aus fluorierten (Co)polymeren. Dabei werden unter halogenierten bzw. fluorierten (Co)polymeren solche (Co)polymere verstanden, die mindestens ein (Co)monomer einpolymerisiert enthalten, das mindestens ein Halogenatom bzw. mindestens ein Fluoratom pro Molekül aufweist, bevorzugt mindestens zwei Halogenatome bzw. mindestens zwei Fluoratome pro Molekül.

Beispiele sind Polyvinylchlorid, Polyvinylidenchlorid, Polytetrafluorethylen, Polyvinylidenfluorid (PVdF), Tetrafluoroethylen-Hexafluorpropylen-Copolymere, Vinylidenfluorid-Hexafluorpropylen-Copolymere (PVdF-HFP), Vinylidenfluorid-Tetrafluorethylen-Copolymere, Perfluoralkylvinylether-Copolymere, Ethylen-Tetrafluorethylen-Copolymere, Vinylidenfluorid-Chlortrifluorethylen-Copolymere und Ethylen-Chlorfluorethylen-Copolymere.

Geeignete Bindemittel sind insbesondere Polyvinylalkohol und halogenierte (Co)polymere, beispielsweise Polyvinylchlorid oder Polyvinylidenchlorid, insbesondere fluorierte (Co)polymere wie Polyvinylfluorid und insbesondere Polyvinylidenfluorid und Polytetrafluorethylen.

In einer Ausführungsform wählt man in erfindungsgemäßen Elektroden elektrisch leitfähiges, kohlenstoffhaltiges Material aus Graphit, Ruß, Kohlenstoffnanoröhren, Graphen oder Mischungen von mindestens zwei der vorstehend genannten Stoffen.

In einer Ausführungsform der vorliegenden Erfindung enthält erfindungsgemäßes Elektrodenmaterial:

(A) im Bereich von 60 bis 98 Gew.-%, bevorzugt 70 bis 96 Gew.-% erfindungsgemäße Partikel,
(B) im Bereich von 1 bis 25 Gew.-%, bevorzugt 2 bis 20 Gew.-% elektrisch leitfähiges, kohlenstoffhaltiges Material,
(C) im Bereich von 1 bis 20 Gew.-%, bevorzugt 2 bis 15 Gew.-% Bindemittel.

Die Geometrie von erfindungsgemäßen Elektroden kann man in weiten Grenzen wählen. Bevorzugt ist es, erfindungsgemäße Elektroden in dünnen Schichten auszugestalten, beispielsweise mit einer Dicke im Bereich von 10 $\mu$m bis 250 $\mu$m, bevorzugt 20 bis 130 $\mu$m.

In einer Ausführungsform der vorliegenden Erfindung umfassen erfindungsgemäße Elektroden eine Folie, beispielsweise eine Metallfolie, insbesondere eine Aluminiumfolie, oder eine Polymerfolie, beispielsweise eine Polyesterfolie, die unbehandelt oder silikonisiert sein kann.

Ein weiterer Gegenstand der vorliegenden Erfindung ist die Verwendung von erfindungsgemäßen Elektrodenmaterialien bzw. erfindungsgemäßen Elektroden in elektrochemischen Zellen. Ein weiterer Gegenstand der vorliegenden Erfindung ist ein Verfahren zur Herstellung von elektrochemischen Zellen unter Verwendung von erfindungsgemäßem Elektrodenmaterial bzw. von erfindungsgemäßen Elektroden. Ein weiterer Gegenstand der vorliegenden Erfindung sind elektrochemische Zellen, enthaltend mindestens ein erfindungsgemäßes Elektrodenmaterial oder mindestens eine erfindungsgemäße Elektrode.

Erfindungsgemäße Elektroden dienen in erfindungsgemäßen elektrochemischen Zellen definitionsgemäß als Kathoden. Erfindungsgemäße elektrochemische Zellen enthalten eine Gegenelektrode, die im Rahmen der vorliegenden Erfindung als Anode definiert wird und die beispielsweise eine Kohlenstoff-Anode, insbesondere eine Graphit-Anode, eine Lithium-Anode, eine Silizium-Anode oder eine Lithium-Titanat-Anode sein kann.

Bei erfindungsgemäßen elektrochemischen Zellen kann es sich beispielsweise um Batterien oder um Akkumulatoren handeln.

Erfindungsgemäße elektrochemische Zellen können neben Anode und erfindungsgemäßer Elektrode weitere Bestandteile umfassen, beispielsweise Leitsalz, nicht-wässriges Lösungsmittel, Separator, Stromableiter, beispielsweise aus einem Metall oder einer Legierung, weiterhin Kabelverbindungen und Gehäuse.

In einer Ausführungsform der vorliegenden Erfindung enthalten erfindungsgemäße elektrische Zellen mindestens ein nicht-wässriges Lösungsmittel, das bei Zimmertemperatur flüssig oder fest sein kann, bevorzugt gewählt aus Polymeren, cyclischen oder nicht-cyclischen Ethern, cyclischen und nicht-cyclischen Acetalen und cyclischen oder nicht cyclischen organischen Carbonaten.

Beispiele für geeignete Polymere sind insbesondere Polyalkylenglykole, bevorzugt Poly-$C_1$-$C_4$-alkylenglykole und insbesondere Polyethylenglykole. Dabei können Polyethylenglykole bis zu 20 mol-% ein oder mehrere $C_1$-$C_4$-Alkylenglykole einpolymerisiert enthalten. Vorzugsweise handelt es sich bei Polyalkylenglykolen um zweifach mit Methyl oder Ethyl verkappte Polyalkylenglykole.

Das Molekulargewicht $M_w$ von geeigneten Polyalkylenglykolen und insbesondere von geeigneten Polyethylenglykolen kann mindestens 400 g/mol betragen.

Das Molekulargewicht $M_w$ von geeigneten Polyalkylenglykolen und insbesondere von geeigneten Polyethylenglykolen kann bis zu 5.000.000 g/mol betragen, bevorzugt bis zu 2.000.000 g/mol betragen

Beispiele für geeignete nicht-cyclische Ether sind beispielsweise Diisopropylether, Di-n-Butylether, 1,2-Dimethoxyethan, 1,2-Diethoxyethan, bevorzugt ist 1,2-Dimethoxyethan.

Beispiele für geeignete cyclische Ether sind Tetrahydrofuran und 1,4-Dioxan.

Beispiele für geeignete nicht-cyclische Acetale sind beispielsweise Dimethoxymethan, Diethoxymethan, 1,1-Dimethoxyethan und 1,1-Diethoxyethan.

Beispiele für geeignete cyclische Acetale sind 1,3-Dioxan und insbesondere 1,3-Dioxolan.

Beispiele für geeignete nicht-cyclische organische Carbonate sind Dimethylcarbonat, Ethylmethylcarbonat und Diethylcarbonat.

Beispiele für geeignete cyclische organische Carbonate sind Verbindungen der allgemeinen Formeln (II) und (III)

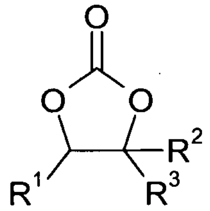

(II)

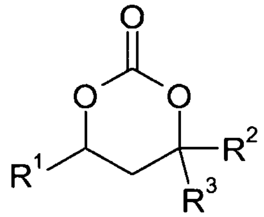

(III)

bei denen $R^1$, $R^2$ und $R^3$ gleich oder verschieden sein können und gewählt aus Wasserstoff und $C_1$-$C_4$-Alkyl, beispielsweise Methyl, Ethyl, n-Propyl, iso-Propyl, n-Butyl, iso-Butyl, sec.-Butyl und tert.-Butyl, wobei vorzugsweise $R^2$ und $R^3$ nicht beide tert.-Butyl sind.

In besonders bevorzugten Ausführungsformen ist $R^1$ Methyl und $R^2$ und $R^3$ sind jeweils Wasserstoff, oder $R^1$, $R^2$ und $R^3$ sind jeweils gleich Wasserstoff.

Ein anderes bevorzugtes cyclisches organisches Carbonat ist Vinylencarbonat, Formel (IV).

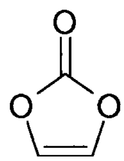

(IV)

Vorzugsweise setzt man das oder die Lösungsmittel im so genannten wasserfreien Zustand ein, d.h. mit einem Wassergehalt im Bereich von 1 ppm bis 30 ppm, bestimmbar beispielsweise durch Karl-Fischer-Titration. Dabei beziehen sich ppm auf Gew.-ppm.

Erfindungsgemäße elektrochemische Zellen enthalten weiterhin mindestens ein Leitsalz. Geeignete Leitsalze sind insbesondere Lithiumsalze. Beispiele für geeignete Lithiumsalze sind $LiPF_6$, $LiBF_4$, $LiClO_4$, $LiAsF_6$, $LiCF_3SO_3$, $LiC(C_nF_{2n+1}SO_2)_3$, Lithiumimide wie $LiN(C_nF_{2n+1}SO_2)_2$, wobei n eine ganze Zahl im Bereich von 1 bis 20 ist, $LiN(SO_2F)_2$, $Li_2SiF_6$, $LiSbF_6$, $LiAlCl_4$, und Salze der allgemeinen Formel $(C_nF_{2n+1}SO_2)_mXLi$, wobei m wie folgt definiert ist:

m = 1, wenn X gewählt wird aus Sauerstoff und Schwefel,
m = 2, wenn X gewählt wird aus Stickstoff und Phosphor, und
m = 3, wenn X gewählt wird aus Kohlenstoff und Silizium.

Bevorzugte Leitsalze sind gewählt aus $LiC(CF_3SO_2)_3$, $LiN(CF_3SO_2)_2$, $LiPF_6$, $LiBF_4$, $LiClO_4$, und besonders bevorzugt sind $LiPF_6$ und $LiN(CF_3SO_2)_2$.

In einer Ausführungsform der vorliegenden Erfindung enthalten erfindungsgemäße elektrochemische Zellen einen oder mehrere Separatoren, durch die die Elektroden mechanisch getrennt sind. Als Separatoren sind Polymerfilme, insbesondere poröse Polymerfilme, geeignet, die gegenüber metallischem Lithium unreaktiv sind. Besonders geeignete Materialien für Separatoren sind Polyolefine, insbesondere filmförmiges poröses Polyethylen und filmförmiges poröses Polypropylen.

Separatoren aus Polyolefin, insbesondere aus Polyethylen oder Polypropylen, können eine Porosität im Bereich von 35 bis 45% haben. Geeignete Porendurchmesser liegen beispielsweise im Bereich von 30 bis 500 nm.

In einer anderen Ausführungsform der vorliegenden Erfindung kann man Separatoren aus mit anorganischen Partikeln gefüllten PET-Vliesen wählen. Derartige Separatoren können eine Porosität im Bereich von 40 bis 55 % aufweisen. Geeignete Porendurchmesser liegen beispielsweise im Bereich von 80 bis 750 nm.

In einer anderen Ausführungsform der vorliegenden Erfindung wählt man Separatoren aus Glasfaserpapier.

Erfindungsgemäße elektrochemische Zellen enthalten weiterhin ein Gehäuse, das beliebige Form haben kann, beispielsweise quaderförmig oder die Form einer zylindrischen Scheibe. In einer Variante wird als Gehäuse eine als Beutel ausgearbeitete Metallfolie eingesetzt.

Erfindungsgemäße elektrochemische Zellen liefern eine hohe Spannung und zeichnen sich aus durch eine

hohe Energiedichte und gute Stabilität aus. Insbesondere beobachtet man, dass erfindungsgemäße elektrochemische Zellen eine hohe Entladekapazität aufweisen, wenn man sie oberhalb von 4,3 V gegen elementares Lithium zykliert, wobei die erfindungsgemäßen elektrochemischen Zellen keinen oder nur einen sehr geringen Abfall der Spannung bei Zyklieren zeigen. Die mittlere Entladespannung sollte beim Zyklisieren zwischen 2,5 V und 4,55 V und Stromraten von 95 mA/g erfindungsgemäßem Material größer als 3,5 V sein.

Erfindungsgemäße elektrochemische Zellen lassen sich miteinander kombinieren, beispielsweise in Reihenschaltung oder in Parallelschaltung. Reihenschaltung ist bevorzugt.

Ein weiterer Gegenstand der vorliegenden Erfindung ist die Verwendung von erfindungsgemäßen elektrochemischen Zellen in Geräten, insbesondere in mobilen Geräten. Beispiele für mobile Geräte sind Fahrzeuge, beispielsweise Automobile, Zweiräder, Flugzeuge oder Wasserfahrzeuge wie Boote oder Schiffe. Andere Beispiele für mobile Geräte sind solche, die man selber bewegt, beispielsweise Computer, insbesondere Laptops, Telefone oder elektrische Handwerkszeuge, beispielsweise aus dem Bereich des Bauens, insbesondere Bohrmaschinen, Akkubohrschrauber oder Akku-Tacker.

Die Verwendung von erfindungsgemäßen elektrochemischen Zellen in Geräten bietet den Vorteil einer besonders hohen volumetrischen Energiedichte.

Ein weiterer Gegenstand der vorliegenden Erfindung ist ein Verfahren zur Herstellung von Elektroden, dadurch gekennzeichnet, dass man

(A) Partikel, enthaltend ein Mischoxid der allgemeinen Formel (I)

$$Li_{1+a}Ni_bCo_cMn_dO_z \qquad (I)$$

in dem die Variablen wie folgt definiert sind:

b eine Zahl im Bereich von 0,25 bis 0,45, bevorzugt 0,37 bis 0,42,

c eine Zahl im Bereich von 0,15 bis 0,25, bevorzugt 0,17 bis 0,22,

$$d = 1 - b - c$$

(1 +a) im Bereich von 1,05 bis 1,20, bevorzugt 1,10 bis 1,15,

$$1{,}8 + a \leq z \leq 2{,}2 + a$$

und wobei die Partikel vollständig oder vorzugsweise partiell beschichtet sind mit einem oder mehreren Fluoriden, wobei Fluoride gewählt sind aus LiF, $NiF_2$, $CoF_2$, $MnF_2$ und Oxifluoriden von einem oder mehreren Metallen, gewählt aus Ni, Mn und Co, und
(B) mindestens ein elektrisch leitfähiges, kohlenstoffhaltiges Material und
(C) mindestens ein Bindemittel
in einem oder mehreren Schritten miteinander vermischt und gegebenenfalls auf
(D) mindestens eine Metall- oder Kunststofffolie
aufbringt.

Erfindungsgemäße Partikel, elektrisch leitfähiges, kohlenstoffhaltiges Material bzw. Kohlenstoff (B) und Bindemittel (C) sind vorstehend definiert.

Das Vermischen kann in einem oder mehreren Schritten erfolgen.

In einer Variante des erfindungsgemäßen Verfahrens vermischt man erfindungsgemäße Partikel, Kohlenstoff (B) und Bindemittel (C) in einem Schritt, beispielsweise in einer Mühle, insbesondere in einer Kugelmühle. Anschließend bringt man die so erhältliche Mischung in einer dünnen Schicht auf einen Träger auf, beispielsweise eine Metall- oder Kunststofffolie (D). Vor oder bei dem Einbau in eine elektrochemische Zelle kann man den Träger entfernen. In anderen Varianten behält man den Träger.

In einer anderen Variante des erfindungsgemäßen Verfahrens vermischt man erfindungsgemäße Partikel, Kohlenstoff (B) und Bindemittel (C) in mehreren Schritten, beispielsweise in einer Mühle, insbesondere in einer Kugelmühle. So kann man beispielsweise zunächst erfindungsgemäße Partikel und Kohlenstoff (B) miteinander vermischen. Danach vermischt man mit Bindemittel (C). Anschließend bringt man die so erhältliche Mischung in einer dünnen Schicht

auf einen Träger auf, beispielsweise eine Metall- oder Kunststofffolie (D). Vor oder bei dem Einbau in eine elektrochemische Zelle kann man den Träger entfernen. In anderen Varianten entfernt man den Träger nicht.

In einer Variante des erfindungsgemäßen Verfahrens vermischt man erfindungsgemäße Partikel, Kohlenstoff (B) und Bindemittel (C) in Wasser oder einem organischen Lösungsmittel (z.B. N-Methylpyrrolidon oder Aceton). Die so erhältliche Suspension wird in einer dünnen Schicht auf einen Träger auf, beispielsweise eine Metall- oder Kunststofffolie (D) aufgebracht und das Lösungsmittel wird anschließend durch eine Wärmebehandlung entfernt. Vor oder bei dem Einbau in eine elektrochemische Zelle kann man den Träger entfernen. In anderen Varianten entfernt man den Träger nicht.

Dünne Schichten im Sinne der vorliegenden Erfindung können beispielsweise eine Dicke im Bereich von 2 μm bis zu 250 μm aufweisen.

Zur Verbesserung der mechanischen Stabilität kann man die Elektroden thermisch oder vorzugsweise mechanisch behandeln, beispielsweise verpressen oder kalandrieren.

Das erfindungsgemäße Verfahren eignet sich gut zur Herstellung von erfindungsgemäßem Elektrodenmaterial und daraus erhältlichen Elektroden.

Ein weiterer Gegenstand der vorliegenden Erfindung sind Komposite, enthaltend Partikel, enthaltend mindestens ein Mischoxid der allgemeinen Formel (I)

$$Li_{1-a}Ni_bCo_cMn_dO_z \qquad (I)$$

in dem die Variablen wie folgt definiert sind:

b eine Zahl im Bereich von 0,25 bis 0,45, bevorzugt 0,37 bis 0,42,

c eine Zahl im Bereich von 0,15 bis 0,25, bevorzugt 0,17 bis 0,22,

$$d = 1 - b - c$$

(1+a) im Bereich von 1,05 bis 1,20, bevorzugt 1,10 bis 1,15,

$$1{,}8 + a \leq z \leq 2{,}2 + a$$

und wobei die Partikel vollständig oder partiell beschichtet sind mit einem oder mehreren Fluoriden, wobei Fluoride gewählt sind aus LiF, $NiF_2$, $CoF_2$, $MnF_2$ und Oxifluoriden von einem oder mehreren Metallen, gewählt aus Ni, Mn und Co, und

mindestens ein elektrisch leitfähiges, kohlenstoffhaltiges Material, auch Kohlenstoff (B) genannt.

In erfindungsgemäßen Kompositen sind erfindungsgemäße Partikel mit Kohlenstoff (B) behandelt, beispielsweise beschichtet.

In einer Ausführungsform der vorliegenden Erfindung liegen in erfindungsgemäßen Kompositen erfindungsgemäße Partikel und Kohlenstoff (B) in einem Gewichtsverhältnis im Bereich von 98 : 1 bis 12 :5 vor, bevorzugt sind 48 : 1 bis 7 : 2.

Erfindungsgemäße Komposite sind besonders geeignet zur Herstellung von erfindungsgemäßem Elektrodenmaterial. Ein Verfahren zu ihrer Herstellung ist vorstehend beschrieben und ebenfalls Gegenstand der vorliegenden Erfindung.

Ein weiterer Gegenstand der vorliegenden Erfindung ist ein Verfahren zur Erstellung von erfindungsgemäßen Partikeln, auch erfindungsgemäßes Syntheseverfahren genannt. Das erfindungsgemäße Syntheseverfahren kann man so durchführen, dass man Hydroxide, Carbonate, Oxihydroxide oder basische Carbonate von Nickel, Mangan und Kobalt in Gegenwart eines Fluorids und mindestens eines Lithiumsalzes kalziniert.

Speziell kann man so vorgehen, dass man zunächst eine Vorstufe herstellt, auch Precursor genannt, die die Übergangsmetalle Ni, Co und Mn im gewünschten Verhältnis und gegebenenfalls die Dotierung(en) enthält, und danach wie vorstehend beschrieben kalziniert. In einer bevorzugten Variante geht man so vor, dass man den Precursor durch Ausfällung von gemischten Carbonaten, die basisch sein können, oder von gemischten Oxyhydroxiden herstellt. In einem zweiten Schritt vermischt man zunächst mit einer Lithiumverbindung, vorzugsweise mit mindestens einem Lithiumsalz, beispielsweise mit Lithiumhydroxid oder besonders bevorzugt mit $Li_2CO_3$, und mit mindestens einem Fluorid. Danach kalziniert man, vorzugsweise 875 bis 950°C für 3 bis 12 Stunden, beispielsweise unter Luftfluss.

In einer Ausführungsform des vorliegenden Syntheseverfahrens kalziniert man bei einer maximalen Temperatur im Bereich von 875 bis 950°C.

In einer Ausführungsform der vorliegenden Erfindung wählt man als Fluorid Ammoniumfluorid oder Ammoniumhydrogendifluorid oder Mischungen von Ammoniumfluorid und Ammoniumhydrogendifluorid.

Die Erfindung wird durch Arbeitsbeispiele erläutert.

Allgemeine Bemerkung: Angaben in Prozent sind Gewichtsprozent, wenn nicht anders angegeben.

Mengenangaben von gelösten Salzen beziehen sich auf kg Lösung.

I. Herstellung von Ausgangsmaterialien

I.1 Lithiumcarbonat

Vor seiner Verwendung wurde kommerziell erhältliches $Li_2CO_3$ über einen Zeitraum von 16 Stunden bei 105°C getrocknet und anschließend Partikel mit einem Durchmesser über 50 µm durch Sieben entfernt.

1.2 Herstellung von Hydroxiden (Precursoren)

$Ni_{0,4}Co_{0,2}Mn_{0,4}(OH)_2$ wurde durch Vereinigung einer Lösung von $NiSO_4$, $CoSO_4$ und $MnSO_4$ mit einer wässrigen Lösung von Ammoniak und NaOH unter starkem Rühren mit einer Zulaufgeschwindigkeit, die einer Verweilzeit von 3 bis 18 Stunden in dem kontinuierlichen Reaktor entspricht, bei 55°C zugegeben wurden. Es fielen sphärische Partikel von $Ni_{0,4}Co_{0,2}Mn_{0,4}(OH)_2$ aus. Das entstandene Mischmetall oxid/hydroxid wurde abfiltriert.

II. Herstellung von erfindungsgemäßen Materialien und Vergleichsmaterialien

II.1 Herstellung von Vergleichsmaterial V-M.1

NCM-424, Li/Metall =1,13

$Ni_{0,4}Co_{0,2}Mn_{0,4}(OH)_2$ wurde über einen Zeitraum von 16 Stunden bei 105°C an der Luft getrocknet.

In einem Achatmörser wurden 6,34 g $Li_2CO_3$ nach I.1 vorgelegt und mit 13,85 g getrocknetem $Ni_{0,4}Co_{0,2}Mn_{0,4}(OH)_2$ über einen Zeitraum von 20 Minuten innig vermischt. Danach wurde die so erhältliche Mischung in einem Muffelofen unter Luft kalziniert, wobei man folgendes Temperaturprofil fuhr:

> Zunächst erhöhte man die Temperatur von Zimmertemperatur auf 350°C um jeweils 3°C/min. Man erhitzte bei 350°C über einen Zeitraum von 4 Stunden. Danach erhöhte man auf 675°C, wobei man die Temperatur jeweils um 3°C/min erhöhte.
> Man erhitzte bei 675°C über einen Zeitraum von 4 Stunden. Danach erhöhte man auf 900°C, wobei man die Temperatur jeweils um 3°C/min erhöhte.
> Man kalzinierte bei 900°C über einen Zeitraum von 6 Stunden. Während des gesamten Erhitzens und des Kalzinierens leitete man Luft durch den Muffelofen (100 l/h).

Nach Beendigung des Kalzinierens kühlte man ab, Abkühlgeschwindigkeit: 0,5 K/min. Man erhielt Vergleichsmaterial V-M.1, das vor der weiteren Verwendung unter Stickstoff gelagert wurde.

11.2 Herstellung von erfindungsgemäßem Material M.2

NCM-424, Li/Metall =1,13, 0,02 mol F

In einem Achatmörser wurden 6,34 g $Li_2CO_3$ nach I.1 vorgelegt und mit 13,85 g getrocknetem $Ni_{0,4}Co_{0,2}Mn_{0,4}(OH)_2$ über einen Zeitraum von 10 Minuten innig vermischt. Danach gab man 0,13 g $NH_4F$ zu und vermischte erneut über einen Zeitraum von 10 Minuten. Danach wurde die so erhältliche Mischung in einem Muffelofen unter Luft kalziniert, wobei man folgendes Temperaturprofil fuhr:

> Zunächst erhöhte man die Temperatur von Zimmertemperatur auf 350°C um jeweils 3°C/min. Man erhitzte bei 350°C über einen Zeitraum von 4 Stunden. Danach erhöhte man auf 675°C, wobei man die Temperatur jeweils um 3°C/min erhöhte.
> Man erhitzte bei 675°C über einen Zeitraum von 4 Stunden. Danach erhöhte man auf 900°C, wobei man die Temperatur jeweils um 3°C/min erhöhte.
> Man kalzinierte bei 900°C über einen Zeitraum von 6 Stunden. Während des gesamten Erhitzens und des Kalzinierens leitete man Luft durch den Muffelofen (100 l/h).

Nach Beendigung des Kalzinierens kühlte man ab, Abkühlgeschwindigkeit: 0,5 K/min. Man erhielt erfindungsgemäßes Material M.2, das vor der weiteren Verwendung unter Stickstoff gelagert wurde.

11.3 Herstellung von erfindungsgemäßem Material M.3

NCM-424, Li/Metall =1,13, 0,1 mol F

In einem Achatmörser wurden 6,34 g $Li_2CO_3$ nach I.1 vorgelegt und mit 13,85 g getrocknetem $Ni_{0,4}Co_{0,2}Mn_{0,4}(OH)_2$ über einen Zeitraum von 10 Minuten innig vermischt. Danach gab man 0,57 g $NH_4F$ zu und vermischte erneut über einen Zeitraum von 10 Minuten. Danach wurde die so erhältliche Mischung in einem Muffelofen unter Luft kalziniert, wobei man folgendes Temperaturprofil fuhr:

Zunächst erhöhte man die Temperatur von Zimmertemperatur auf 350°C um jeweils 3°C/min. Man erhitzte bei 350°C über einen Zeitraum von 4 Stunden. Danach erhöhte man auf 675°C, wobei man die Temperatur jeweils um 3°C/min erhöhte.
Man erhitzte bei 675°C über einen Zeitraum von 4 Stunden. Danach erhöhte man auf 900°C, wobei man die Temperatur jeweils um 3°C/min erhöhte.
Man kalzinierte bei 900°C über einen Zeitraum von 6 Stunden. Während des gesamten Erhitzens und des Kalzinierens leitete man Luft durch den Muffelofen (100 l/h).

Nach Beendigung des Kalzinierens kühlte man ab, Abkühlgeschwindigkeit: 0,5 K/min. Man erhielt erfindungsgemäßes Material M.3, das vor der weiteren Verwendung unter Stickstoff gelagert wurde.

11.4 Herstellung von erfindungsgemäßem Material M.4

NCM-424, Li/Metall =1,13, 0,2 mol F

In einem Achatmörser wurden 6,34 g $Li_2CO_3$ nach I.1 vorgelegt und mit 13,85 g getrocknetem $Ni_{0,4}Co_{0,2}Mn_{0,4}(OH)_2$ über einen Zeitraum von 10 Minuten innig vermischt. Danach gab man 1,14 g $NH_4F$ zu und vermischte erneut über einen Zeitraum von 10 Minuten. Danach wurde die so erhältliche Mischung in einem Muffelofen unter Luft kalziniert, wobei man folgendes Temperaturprofil fuhr:

Zunächst erhöhte man die Temperatur von Zimmertemperatur auf 350°C um jeweils 3°C/min. Man erhitzte bei 350°C über einen Zeitraum von 4 Stunden. Danach erhöhte man auf 675°C, wobei man die Temperatur jeweils um 3°C/min erhöhte.
Man erhitzte bei 675°C über einen Zeitraum von 4 Stunden. Danach erhöhte man auf 900°C, wobei man die Temperatur jeweils um 3°C/min erhöhte.
Man kalzinierte bei 900°C über einen Zeitraum von 6 Stunden. Während des gesamten Erhitzens und des Kalzinierens leitete man Luft durch den Muffelofen (100 l/h).

Nach Beendigung des Kalzinierens kühlte man ab, Abkühlgeschwindigkeit: 0,5 K/min. Man erhielt erfindungsgemäßes Material M.4, das vor der weiteren Verwendung unter Stickstoff gelagert wurde.

II.5 Herstellung von erfindungsgemäßem Material M.5

NCM-424, Li/Metall =1,2, 0,1 mol F

In einem Achatmörser wurden 6,74 g $Li_2CO_3$ nach 1.1 vorgelegt und mit 13,85 g getrocknetem $Ni_{0,4}Co_{0,2}Mn_{0,4}(OH)_2$ über einen Zeitraum von 10 Minuten innig vermischt. Danach gab man 0,57 g $NH_4F$ zu und vermischte erneut über einen Zeitraum von 10 Minuten. Danach wurde die so erhältliche Mischung in einem Muffelofen unter Luft kalziniert, wobei man folgendes Temperaturprofil fuhr:

Zunächst erhöhte man die Temperatur von Zimmertemperatur auf 350°C um jeweils 3°C/min. Man erhitzte bei 350°C über einen Zeitraum von 4 Stunden. Danach erhöhte man auf 675°C, wobei man die Temperatur jeweils um 3°C/min erhöhte.
Man erhitzte bei 675°C über einen Zeitraum von 4 Stunden. Danach erhöhte man auf 900°C, wobei man die Temperatur jeweils um 3°C/min erhöhte.
Man kalzinierte bei 900°C über einen Zeitraum von 6 Stunden. Während des gesamten Erhitzens und des Kalzinierens leitete man Luft durch den Muffelofen (100 l/h).

Nach Beendigung des Kalzinierens kühlte man ab, Abkühlgeschwindigkeit: 0,5 K/min. Man erhielt erfindungsgemäßes Material M.5, das vor der weiteren Verwendung unter Stickstoff gelagert wurde.

III. Elektrochemische Messung:

III.1 Messungen mit erfindungsgemäßen Halbzellen

Zur Herstellung einer Kathode (Kat-hz-2) vermischte man miteinander:

88 % M.2
6 % Polyvinylidendifluorid ("PVdF"), kommerziell erhältlich als Kynar Flex® 2801 der Arkema Group,
3 % Ruß, BET-Oberfläche von 62 $m^2/g$, kommerziell erhältlich als "Super P Li" der Firma Timcal,
3 % Graphit, kommerziell erhältlich als KS6 der Fa. Timcal;

in einem verschraubbaren Gefäß. Unter Rühren versetzte man mit so viel N-Methylpyrrolidon (NMP) und rührte mit einem Ultraturrax, bis man eine zähe klumpenfreie Paste erhalten hatte.

Dann rakelte man die so erhaltene Paste auf 20 µm dicke Aluminiumfolie auf und trocknete 16 Stunden lang in einem Vakuumtrockenschrank bei 120 °C. Die Beladung betrug nach dem Trocknen 1,1 $mg/cm^2$. Anschließend stanzte man kreisscheibenförmige Segmente aus, Fläche: 3 $cm^2$. Man erhielt erfindungsgemäße Kathode (Kat-hz-2).

Anode (An-hz-1): man stanzte eine Lithium-Scheibe, Fläche 3 $cm^2$ aus. Man erhielt Anode (An-hz-1).

Als Testzelle wurde ein Aufbau gemäß Abbildung 1 verwendet. Beim Zusammenbau der Zelle wurde diese von unten nach oben gemäß der schematischen Abbildung 1 zusammengesetzt. In Abbildung 1 befindet sich die Anodenseite oben, die Kathodenseite unten.

Die Erläuterungen in Abbildung 1 bedeuten:

1, 1' Stempel
2, 2' Mutter
3, 3' Dichtungsring -jeweils doppelt, der jeweils zweite, etwas kleinere Dichtungsring ist hier nicht gezeigt
4 Spiralfeder
5 Stromableiter aus Edelstahl
6 Gehäuse

Auf den Stempel der Kathodenseite 1' wurde Kathode (Kat-hz-2) aufgebracht. Anschließend wurde ein Separator aus Glasfaser, Dicke des Separators: 0,5 mm, auf Kathode (Kat-hz-2) gelegt. Auf den Separator wurde Elektrolyt geträufelt. Anode (An-hz-1) wurde auf die getränkten Separatoren gelegt. Als Stromableiter 5 wurde ein Edelstahlplättchen benutzt, welches direkt auf die Anode aufgebracht wurde. Anschließend wurden die Dichtungen 3 und 3' hinzugefügt und die Bestandteile der Testzelle zugeschraubt. Mittels der als Spiralfeder 4 ausgebildeten Stahlfeder und durch den Druck, welcher durch die Verschraubung mit Anodenstempel 1 erzeugt wurde, wurde der elektrische Kontakt gewährleistet.

Die Herstellung von erfindungsgemäßen Zellen auf Basis von erfindungsgemäßen Materialien M.3 bis M.5 bzw. Vergleichsmaterial V-M.1 erfolgte analog.

Als Elektrolyt setzte man eine 1 M Lösung von $LiPF_6$ in Ethylmethylcarbonat/Diethylcarbonat (Volumenverhältnis 1:1) ein.

Man erhielt eine erfindungsgemäße elektrochemische Zelle, die man bei 25°C testete, und zwar bei einem Spannungsbereich der Zelle: 3,0 V - 4,3 V bzw. 3,0 V - 4,6 V.

Man fuhr folgendes Zyklenprogramm:

0,1 C laden, 0,1 C entladen 2x
0,2 C laden, 0,2 C entladen 5x
0,2 C laden, 0,4 C entladen 1 x
0,2 C laden, 0,8 C entladen 1x
0,2 C laden, 1,6 C entladen 1x
0,2 C laden, 3,2 C entladen 1x
0,2 C laden, 6,4 C entladen 1 x
0,1 C laden, 0,1 C entladen 2x (oder 1x)
0,2 C laden, 0,2 C entladen 5x

0,2 C laden, 1 C entladen 1x,
0,4 C laden, 1 C entladen 1x,
1 C laden, 1 C entladen 53x,
0,2 C laden, 0,2 C entladen 3x,
1 C laden, 1 C entladen 53x
0,2 C laden, 0,2 C entladen 3x,

Der Kapazitätsverlust in Halbzellen bei schneller Entladung war äußerst gering.

III.2 Messung mit erfindungsgemäßen Vollzellen

Herstellung von Vollzellen:

Zur Herstellung einer Kathode (Kat-vz-2) vermischte man miteinander:

85,2 % M.2
8,3 % Polyvinylidendifluorid ("PVdF"), kommerziell erhältlich als Kynar Flex® 2801 der Arkema Group,
3,2 % Ruß, BET-Oberfläche von 62 $m^2$/g, kommerziell erhältlich als "Super P Li" der Firma Timcal,
3,3 % Graphit, kommerziell erhältlich als KS6 der Fa. Timcal;

in einem verschraubbaren Gefäß. Unter Rühren versetzte man mit so viel N-Methylpyrrolidon (NMP) und rührte mit einem Ultraturrax, bis man eine zähe klumpenfreie Paste erhalten hatte.
Dann rakelte man die so erhaltene Paste auf 20 μm dicke Aluminiumfolie auf und trocknete 16 Stunden lang in einem Vakuumtrockenschrank bei 120 °C. Die Beladung betrug nach dem Trocknen 1,1 mg/$cm^2$. Anschließend stanzte man kreisscheibenförmige Segmente aus, Fläche: 1,13 $cm^2$. Man erhielt erfindungsgemäße Kathode (Kat-vz-2).
Elektrochemische Testung wurde in "Swagelok"-Zellen durchgeführt. Als Elektrolyt setzte man eine 1 M Lösung von $LiPF_6$ in Ethylmethylcarbonat/Ethylencarbonat (Volumenverhältnis 1:1) ein.
Separator: Glasfaser. Anode: Graphit. Temperatur: 25°C. Spannungsbereich der Zelle: 2,50 V - 4,525 V. Zyklenprogramm: 0,1 C (erster und zweiter Zyklus), 0,5 C (ab dem dritten Zyklus). 1 C = 190 mA/g.

Ergebnisse:

Der Kapazitätsverlust in Vollzellen gemäß Tabelle 1 wurde wie folgt berechnet: die Differenz der mittleren Kapazität nach 70 Zyklen und nach 2 Zyklen, geteilt durch die mittlere Kapazität nach 70 Zyklen, und multipliziert mit 100 ergibt den Kapazitätsverlust (englisch: "fading").

Tabelle 1: Ergebnisse des Kapazitätsverlust bei Messungen in Vollzellen:

| Eingesetzte Kathode | Kapazitätsverlust [%] |
|---|---|
| (kat-vz-2) | 10 |
| (kat-vz-.3) | 8 |

## Patentansprüche

**1.** Partikel, enthaltend ein Mischoxid der allgemeinen Formel (I)

$$Li_{1+a}Ni_bCo_cMn_dO_z \qquad (I)$$

in dem die Variablen wie folgt definiert sind:

b eine Zahl im Bereich von 0,25 bis 0,45
c eine Zahl im Bereich von 0,15 bis 0,25

$$1{,}8 + a \leq z \leq 2{,}2 + a$$

$$d = 1 - b - c$$

(1 +a) im Bereich von 1,05 bis 1,20,
wobei die Partikel vollständig oder partiell beschichtet sind mit einem oder mehreren Fluoriden, wobei Fluoride gewählt sind aus LiF, $NiF_2$, $CoF_2$, $MnF_2$ und Oxifluoriden von einem oder mehreren Metallen, gewählt aus Ni, Mn und Co.

2. Partikel nach Anspruch 1, **dadurch gekennzeichnet, dass** in ihnen das Molverhältnis von Fluorid zu Summe der Übergangsmetalle in Mischoxid der allgemeinen Formel (I) im Bereich von 0,02 bis 0,15 liegt.

3. Partikel nach Anspruch 1 oder 2, **dadurch gekennzeichnet, dass** mindestens 5 % der äußeren Oberfläche der Partikel mit Fluorid bedeckt sind.

4. Partikel nach einem der Ansprüche 1 bis 3, **dadurch gekennzeichnet, dass** sie einen mittleren Durchmesser (D50) im Bereich von 1 bis 30 $\mu$m aufweisen.

5. Partikel nach einem der Ansprüche 1 bis 4, **dadurch gekennzeichnet, dass** sie im Wesentlichen kugelförmig sind.

6. Partikel nach einem der Ansprüche 1 bis 5, **dadurch gekennzeichnet, dass** sie $Li_2MnO_3$ enthalten.

7. Verwendung von Partikeln nach einem der Ansprüche 1 bis 6 zur Herstellung von Elektroden.

8. Elektrode, enthaltend Partikel nach einem der Ansprüche 1 bis 7, mindestens ein elektrisch leitfähiges, kohlenstoffhaltiges Material und mindestens ein Bindemittel.

9. Elektrode nach Anspruch 8, **dadurch gekennzeichnet, dass** man elektrisch leitfähiges, kohlenstoffhaltiges Material wählt aus Graphit, Ruß, Kohlenstoffnanoröhren, Graphen oder Mischungen von mindestens zwei der vorstehend genannten Stoffen.

10. Verwendung von Partikeln nach einem der Ansprüche 1 bis 6 oder von Elektroden nach Anspruch 8 oder 9 in elektrochemischen Zellen.

11. Verfahren zur Herstellung von elektrochemischen Zellen unter Verwendung von Partikeln nach einem der Ansprüche 1 bis 6 oder von Elektroden nach Anspruch 8 oder 9.

12. Verfahren zur Herstellung von Elektroden unter Verwendung von Partikeln nach einem der Ansprüche 1 bis 6 oder von Elektroden nach Anspruch 8 oder 9.

13. Elektrochemische Zelle, enthaltend Elektrodenmaterial nach einem der Ansprüche 1 bis 6 oder mindestens eine Elektrode nach Anspruch 8 oder 9.

14. Verwendung von elektrochemischen Zellen nach Anspruch 13 als Stromquelle in mobilen Geräten.

15. Verwendung von elektrochemischen Zellen nach Anspruch 14, **dadurch gekennzeichnet, dass** das mobile Gerät ein Automobil, ein Zweirad, ein Flugzeug, ein Computer, ein Telefon oder ein elektrisches Handwerkzeug ist.

16. Verfahren zur Herstellung von Partikeln nach einem der Ansprüche 1 bis 6, dass man Hydroxide, Carbonate, Oxihydroxide oder basische Carbonate von Nickel, Mangan und Kobalt in Gegenwart eines Fluorids und mindestens eines Lithiumsalzes kalziniert, wobei man als Fluorid Ammoniumfluorid oder Ammoniumhydrogendifluorid wählt.

## Claims

1. Particles comprising a mixed oxide of the general formula (I)

$$Li_{1+a}Ni_bCo_cMn_dO_z \qquad (I)$$

in which the variables are each defined as follows:

b is a number in the range from 0.25 to 0.45
c is a number in the range from 0.15 to 0.25

$$1.8 + a \leq z \leq 2.2 + a$$

$$d = 1 - b - c$$

(1+a) is in the range from 1.05 to 1.20,
the particles having been fully or partially coated with one or more fluorides, fluorides being selected from LiF, $NiF_2$, $CoF_2$, $MnF_2$ and oxyfluorides of one or more metals selected from Ni, Mn and Co.

**2.** Particles according to claim 1, wherein the molar ratio of fluoride to sum of the transition metals in mixed oxide of the general formula (I) is in the range from 0.02 to 0.15.

**3.** Particles according to claim 1 or 2, wherein at least 5% of the outer surface of the particles is covered with fluoride.

**4.** Particles according to any of claims 1 to 3, which have a mean diameter (D50) in the range from 1 to 30 μm.

**5.** Particles according to any of claims 1 to 4, which are essentially spherical.

**6.** Particles according to any of claims 1 to 5, which comprise $Li_2MnO_3$.

**7.** The use of particles according to any of claims 1 to 6 for production of electrodes.

**8.** An electrode comprising particles according to any of claims 1 to 7, at least one electrically conductive, carbonaceous material and at least one binder.

**9.** The electrode according to claim 8, wherein electrically conductive, carbonaceous material is selected from graphite, carbon black, carbon nanotubes, graphene or mixtures of at least two of the aforementioned substances.

**10.** The use of particles according to any of claims 1 to 6 or of electrodes according to claim 8 or 9 in electrochemical cells.

**11.** A process for producing electrochemical cells using particles according to any of claims 1 to 6 or electrodes according to claim 8 or 9.

**12.** A process for producing electrodes using particles according to any of claims 1 to 6 or electrodes according to claim 8 or 9.

**13.** An electrochemical cell comprising electrode material according to any of claims 1 to 6 or at least one electrode according to claim 8 or 9.

**14.** The use of electrochemical cells according to claim 13 as a power source in mobile devices.

**15.** The use of electrochemical cells according to claim 14, wherein the mobile device is an automobile, a bicycle, an aircraft, a computer, a telephone or a power tool.

**16.** A process for producing particles according to any of claims 1 to 6, which comprises calcining hydroxides, carbonates, oxyhydroxides or basic carbonates of nickel, manganese and cobalt in the presence of a fluoride and of at least one lithium salt, the fluoride selected being ammonium fluoride or ammonium hydrogendifluoride.

**Revendications**

1. Particules, contenant un oxyde mixte de formule générale (I)

$$Li_{1+a}Ni_bCo_cMn_dO_z \quad (I)$$

dans laquelle les variables sont définies de la manière suivante :

b un nombre dans la plage allant de 0,25 à 0,45,
c un nombre dans la plage allant de 0,15 à 0,25,

$$1,8 + a \leq z \leq 2,2 + a$$

$$d = 1 - b - c$$

(1 + a) dans la plage allant de 1,05 à 1,20,
les particules étant revêtues en totalité ou en partie avec un ou plusieurs fluorures, les fluorures étant choisis parmi LiF, $NiF_2$, $CoF_2$, $MnF_2$ et les oxyfluorures d'un ou de plusieurs métaux, choisis parmi Ni, Mn et Co.

2. Particules selon la revendication 1, **caractérisées en ce que**, dans celles-ci, le rapport molaire entre le fluorure et la somme des métaux de transition dans l'oxyde mixte de formule générale (I) se situe dans la plage allant de 0,02 à 0,15.

3. Particules selon la revendication 1 ou 2, **caractérisées en ce qu'**au moins 5 % de la surface extérieure des particules est revêtue avec du fluorure.

4. Particules selon l'une quelconque des revendications 1 à 3, **caractérisées en ce qu'**elles présentent un diamètre moyen (D50) dans la plage allant de 1 à 30 µm.

5. Particules selon l'une quelconque des revendications 1 à 4, **caractérisées en ce qu'**elles sont essentiellement sphériques.

6. Particules selon l'une quelconque des revendications 1 à 5, **caractérisées en ce qu'**elles contiennent $Li_2MnO_3$.

7. Utilisation de particules selon l'une quelconque des revendications 1 à 6 pour la fabrication d'électrodes.

8. Électrodes, contenant des particules selon l'une quelconque des revendications 1 à 7, au moins un matériau carboné électriquement conducteur et au moins un liant.

9. Électrodes selon la revendication 8, **caractérisées en ce que** le matériau carboné électriquement conducteur est choisi parmi le graphite, le noir de carbone, les nanotubes de carbone, le graphène ou les mélanges d'au moins deux des matières susmentionnées.

10. Utilisation de particules selon l'une quelconque des revendications 1 à 6 ou d'électrodes selon la revendication 8 ou 9 dans des cellules électrochimiques.

11. Procédé de fabrication de cellules électrochimiques utilisant des particules selon l'une quelconque des revendications 1 à 6 ou des électrodes selon la revendication 8 ou 9.

12. Procédé de fabrication d'électrodes utilisant des particules selon l'une quelconque des revendications 1 à 6 ou des électrodes selon la revendication 8 ou 9.

13. Cellule électrochimique, contenant un matériau d'électrode selon l'une quelconque des revendications 1 à 6 ou au moins une électrode selon la revendication 8 ou 9.

**14.** Utilisation de cellules électrochimiques selon la revendication 13 en tant que source de courant dans des appareils mobiles.

**15.** Utilisation de cellules électrochimiques selon la revendication 14, **caractérisée en ce que** l'appareil mobile est une automobile, un deux-roues, un avion, un ordinateur, un téléphone ou un outil à main électrique.

**16.** Procédé de fabrication de particules selon l'une quelconque des revendications 1 à 6, **caractérisé en ce que** des hydroxydes, des carbonates, des oxyhydroxydes ou des carbonates basiques de nickel, manganèse et cobalt sont calcinés en présence d'un fluorure et d'au moins un sel de lithium, le fluorure d'ammonium ou l'hydrogénodifluorure d'ammonium étant choisi en tant que fluorure.

Abbildung 1: schematischer Aufbau einer auseinandergenommenen elektrochemischen Zelle zum Testen von erfindungsgemäßen Mischungen

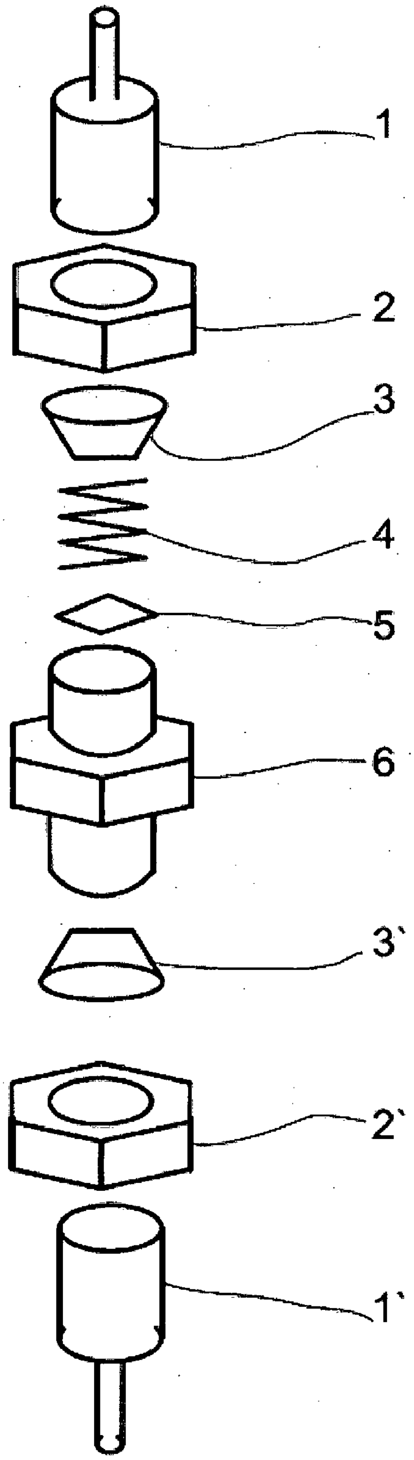

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2006109930 A


### In der Beschreibung aufgeführte Nicht-Patentliteratur


- **VON A. JESS et al.** *Chemie Ingenieur Technik,* 2006, vol. 78, 94-100